Europäisches Patentamt

European Patent Office

Office européen des brevets

(11) Veröffentlichungsnummer: **0 255 055 B1**

(12) **EUROPÄISCHE PATENTSCHRIFT**

(45) Veröffentlichungstag der Patentschrift: **03.06.92**

(21) Anmeldenummer: **87110715.7**

(22) Anmeldetag: **24.07.87**

(51) Int. Cl.⁵: **E04H  3/26**

(54) **Hubpodium bzw.-podest.**

(30) Priorität: **30.07.86 DE 8620414 U**

(43) Veröffentlichungstag der Anmeldung:
**03.02.88 Patentblatt  88/05**

(45) Bekanntmachung des Hinweises auf die
Patenterteilung:
**03.06.92 Patentblatt  92/23**

(84) Benannte Vertragsstaaten:
**BE CH DE FR LI LU NL SE**

(56) Entgegenhaltungen:
**CH-A- 409 276**
**DE-A- 3 309 203**
**DE-A- 3 412 549**

(73) Patentinhaber: **P. Wiegand GmbH**
**Heidkamp 3**
**W-2906 Wardenburg(DE)**

(72) Erfinder: **Wiegand, Hans-Peter**
**Einsteinstrasse 18**
**W-2903 Bad Zwischenahn/Ofen(DE)**
Erfinder: **Heck, Erwin**
**Weissenmoorstrasse 278A**
**W-2900 Oldenburg(DE)**

(74) Vertreter: **Bolte, Erich, Dipl.-Ing. et al**
**c/o Meissner, Bolte & Partner Patentanwälte**
**Hollerallee 73**
**W-2800 Bremen 1(DE)**

## Beschreibung

Die Erfindung betrifft ein Hubpodium bzw. ein Hubpodest gemäß dem Oberbegriff des Anspruchs 1 bzw. 8.

Die hier angesprochenen Hubpodien bzw. Hubpodeste finden bei Vorführungen Verwendung, bei denen exponiert etwas gezeigt werden soll, insbesondere beim Theater. Die höhenverstellbare bzw. neigbare Plattform ermöglicht es, Gegenstände, Personen (Schauspieler) oder dergleichen in optimaler Weise hervorzuheben.

Aus der DE-A-34 12 549 ist ein Podestbock bekannt, bei dem die Arretierung der Plattform durch Einrastung von mit Federn belasteten Rastzapfen in dafür vorgesehene Rastlöcher erfolgt. Dabei sind die Enden der zu bewegenden Scherenarme der Scheren an einen Schlitten angelenkt, der auf einer Führungsbahn beweglich angeordnet ist. In der Führungsbahn sind in regelmäßigen Abständen die Rastlöcher angebracht. Aus diesen lassen sich die Rastzapfen zur Entriegelung mittels Bowdenzüge zurückziehen. Auch die DE-A-33 09 203 zeigt einen Podestbock, dessen Arretierung durch das Einrasten von Rastzapfen in dafür vorgesehene Löcher erfolgt. Nachteilig an den bekannten Arretierungen ist, daß das Ein- und Ausrasten der entsprechenden freien Enden der Scherenarme zum Verstellen umständlich ist. Darüber hinaus ist nicht immer gewährleistet, daß die freien Enden der Scherenarme beider Scheren eines Scherenpaares nach dem Verstellen zuverlässig arretiert sind. Es leidet dann nicht nur die Stabilität des Hubpodiums bzw. -podestes; vielmehr besteht auch eine akute Unfall- und Beschädigungsgefahr.

Der Erfindung liegt daher die Aufgabe zugrunde, ein Hubpodium bzw. -podest zu schaffen, welches sich einfach und zuverlässig in der Höhe und in der Neigung verstellen läßt und eine sichere Arretierung sämtlicher Scheren nach dem Verstellen gewährleistet.

Ein Hubpodium bzw. -podest zur Lösung dieser Aufgabe weist Merkmale des Anspruchs 1 bzw. des Anspruchs 8 auf. Bei der Verwendung von Klinken zur Arretierung der Scheren ist von der Erkenntnis ausgegangen worden, daß diese als bewährte Arretierungsorgane eine sichere Arretierung der Plattform in der momentan eingestellten Höhe bzw. Neigung gewährleisten. Darüber hinaus stellen Klinken ein im Aufbau einfaches Arretierungsorgan dar, welches einfach bedienbar ist.

Bei einer Ausführungsform der Erfindung sind dem freien (verstellbaren) Scherenarm jeder Schere eine Mehrzahl von Klinken zugeordnet, deren Anzahl der für das Hubpodium bzw. -podest vorgesehenen Verstellposition entspricht. Auf diese Weise ist gewährleistet, daß sich die Plattform exakt auf die vorgesehenen (genormten) Höhen bzw.

Neigungen je nach Bedarf mühelos einstellen läßt. Nach Lösen einer vorhergehend eingestellten Höhe bzw. Neigung der Plattform erreicht diese zwangsläufig die nächste Position, indem ein entsprechender Anschlag an den freien Enden des zu verstellenden Scherenarmes bis vor die nächste Klinke rutscht.

Nach einem weiteren Vorschlag der Erfindung sind die Klinken schwenkbar ausgebildet, derart, daß sie federbelastet selbsttätig in ihre Verriegelungsstellung schwenken. Alternativ oder zusätzlich ist es möglich, durch eine entsprechende Ausbildung der Klinken oder deren Steuerungsorgane diese durch Eigengewicht in die Verriegelungsstellung schwenken zu lassen. Dadurch wird eine zuverlässige Arretierung des erfindungsgemäßen Hubpodiums in den vorgesehenen Stellungen erreicht. Um bei der Belastung des Hubpodiums den Schwenkmechanismus der Klinken zu entlasten, wird weiterhin vorgeschlagen, diesen im belasteten Zustand einem Anschlag zuzuordnen. Dadurch ist selbst bei hohen Belastungen des Hubpodiums eine ausreichende Stabilität des erfindungsgemäßen Verriegelungsmechanismus gewährleistet.

Nach einem weiteren, wesentlichen Merkmal der Erfindung sind mindestens alle Klinken einer Schere gemeinsam betätigbar, indem sie mit einem entsprechenden Betätigungsorgan, nämlich einer Betätigungsschiene, verbunden sind. Durch deren Bewegung können sämtliche Klinken einer Schere gleichzeitig in eine Ent- bzw. Verriegelungsstellung gebracht werden. Zweckmäßigerweise sind die Betätigungsschienen nebeneinanderliegender Scherenpaare einer Stütze miteinander verbunden, so daß zum Verstellen der Höhe bzw. der Neigung des Hubpodiums eine Bedienungsperson zwangsläufig durch einen einzigen Handgriff sämtliche Klinken ent- bzw. verriegeln kann.

Nach einer anderen Ausführungsform der Erfindung verfügt jeder einem Scherenpaar zugeordnete Klinkenmechanismus über eine einzige Klinke für alle Raststellungen. Diese Klinke ist ausgebildet als eine (längliche) Betätigungsschiene mit einem flachen rechteckförmigen Querschnitt. Die Betätigungsschiene ist in entriegelter Stellung etwa aufrecht angeordnet, während sie in verriegelter Stellung federvorbelastet kippbar ist, also zum Verriegeln geneigt gehalten ist. Diese Ausbildung der Klinkenmechanismen zeichnet sich durch eine besondere Einfachheit und Zuverlässigkeit aus, weil nur eine einzige Klinke erforderlich ist, die integraler Bestandteil der Betätigungsschiene ist. Die besondere Zuverlässigkeit dieser Klemmechanismen hängt damit zusammen, daß eine Bewegung desselben von einer Ver- in eine Entriegelungsstellung und umgekehrt durch eine Bewegung quer zur Verstellrichtung der schwenkbaren Scherenarme der Scherenpaare erfolgt. Dadurch fallen die von den Scherenarmen auf das jeweilige Verriegelungsorgan ausgeübten Haltekräfte in ihrer Richtung nicht zusammen mit der Bewegungsrichtung der Klinkenmechanismen, so daß keine Gefahr besteht, daß bei hohen Belastungen die Scherenarme die Klinkenmechanismen in eine Entriegelungsstellung zurückschwenken.

Drei Ausführungsbeispiele der Erfindung werden nachfolgend anhand der Zeichnungen näher erläutert. Es zeigen:

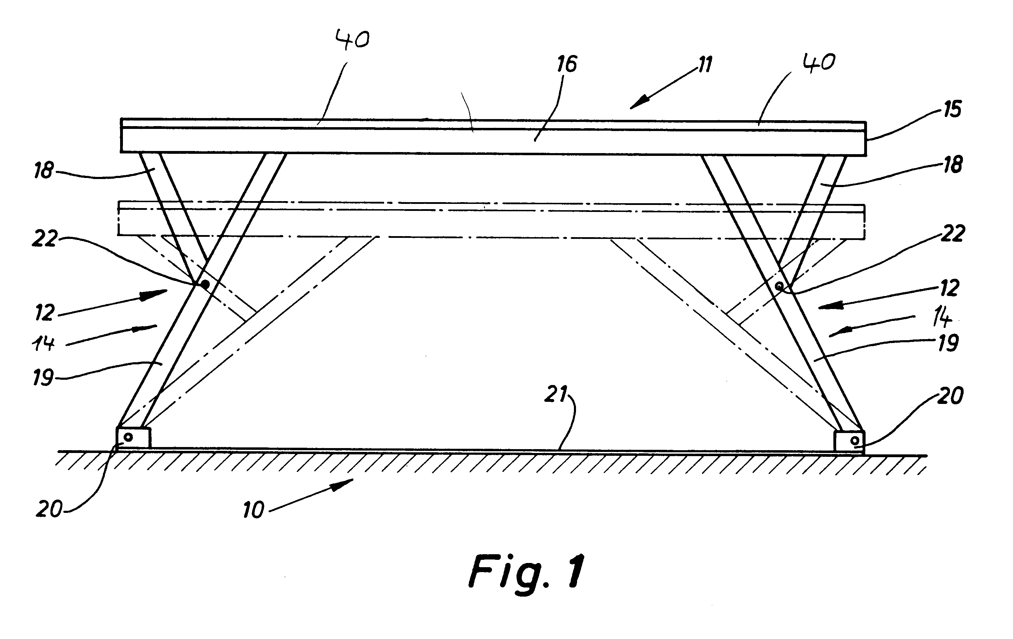

Fig. 1 eine Seitenansicht eines Hubpodiums,

Fig. 2 eine Vorderansicht des Hubpodiums gemäß der Fig. 1,

Fig. 3 einen vertikalen Längsschnitt durch das Hubpodium gemäß der Fig. 1,

Fig. 4 einen vergrößert dargestellten Querschnitt durch den Verriegelungsmechanismus des Hubpodiums,

Fig. 5 eine Seitenansicht auf den Verriegelungsmechanismus gemäß der Fig. 4,

Fig. 6 einen vergrößert dargestellten Längsschnitt durch ein Hubpodium gemäß eines zweiten Ausführungsbeispiels,

Fig. 7 einen vergrößert dargestellten Querschnitt durch einen Verriegelungsmechanismus des Hubpodiums gemäß Fig. 6,

Fig. 8 eine Seitenansicht auf den Verriegelungsmechanismus gemäß der Fig. 7,

Fig. 9 einen vertikalen Längsschnitt durch ein Hubpodium gemäß eines dritten Ausführungsbeispiels gemäß der Fig. 3,

Fig. 10 einen vergrößert daragestellten Querschnitt durch den Verriegelungsmechanismus beim Hubpodium der Fig. 9 in Verriegelungsstellung,

Fig. 11 einen Querschnitt gemäß der Fig. 10 durch den sich in Entriegelungsstellung befindlichen Verriegelungsmechanismus,

Fig. 12 eine vergrößert dargestellte Seitenansicht auf den Verriegelungsmechanismus gemäß des Ausführungsbeispiels der Fig. 9 bis 11 im Bereich zweier Arretierungsstellen.

Die vorliegenden Ausführungsbeispiele zeigen ein Hubpodium 10, dessen Plattform 11 durch insgesamt vier Scheren 12, die zu zwei jeweils eine Stütze 14 bildenden Scherenpaaren 13 gruppiert sind, sowohl in der Höhe, als auch in der Neigung verstellbar sind. Die Höhenverstellung erfolgt durch gleiches Verstellen beider Scherenpaare 13, während eine Neigungsverstellung durch ein Verstellen des Scherenpaares 13 nur einer Stütze 14 erfolgt.

Die Plattform 11 besteht aus einer ebenen, in den Figuren horizontalliegend dargestellten Platte 40 aus Holz oder dergleichen und einer an ihrer Unterseite angeordneten Randeinfassung 15 aus an gegenüberliegenden Rändern der Platte 40 parallel verlaufenden Längsprofilen 16 und zwei quer dazu verlaufenden Querprofilen 17. Mit der Randeinfassung 15, nämlich den Längsprofilen 16 bzw. den Querprofilen 17 sind die Scheren 12 verbunden.

Die Scheren 12 bestehen im vorliegenden Ausführungsbeispiel aus jeweils zwei unterschiedlich langen Scherenarmen 18 bzw. 19. Mit den unteren (freien) Enden der langen Scherenarme 19 steht das Hubpodium 10 auf der Erde, und zwar im vorliegenden Ausführungsbeispiel nicht direkt, sondern indirekt auf gelenkig daran befestigten Fußstücken 20. Die jeweils auf einer Seite liegenden Fußstücke 20 gegenüberliegender Scherenpaare 13 sind dabei aus Stabilitätsgründen durch eine flache Schiene 21 miteinander verbunden. Bei kleineren Hubpodien kann hierauf gegebenenfalls verzichtet werden. Mit dem gegenüberliegenden (freien) Ende ist jeder (lange) Scherenarm 19 verstellbar mit der Plattform 11 verbunden, und zwar mit dem jeweiligen Längsprofil 16 der Randeinfassung 15. Etwa mittig verfügt der (lange) Scherenarm 19 über ein Gelenk 22, womit das untere Ende des (kurzen) Scherenarms 18 am (langen) Scherenarm 19 angelegt ist. Das obere Ende des (kurzen) Scherenarms 18 ist schließlich wiederum mit der Plattform 11, nämlich mit dem entsprechenden Querprofil 17 der Randeinfassung 15 schwenkbar, aber unverstellbar verbunden.

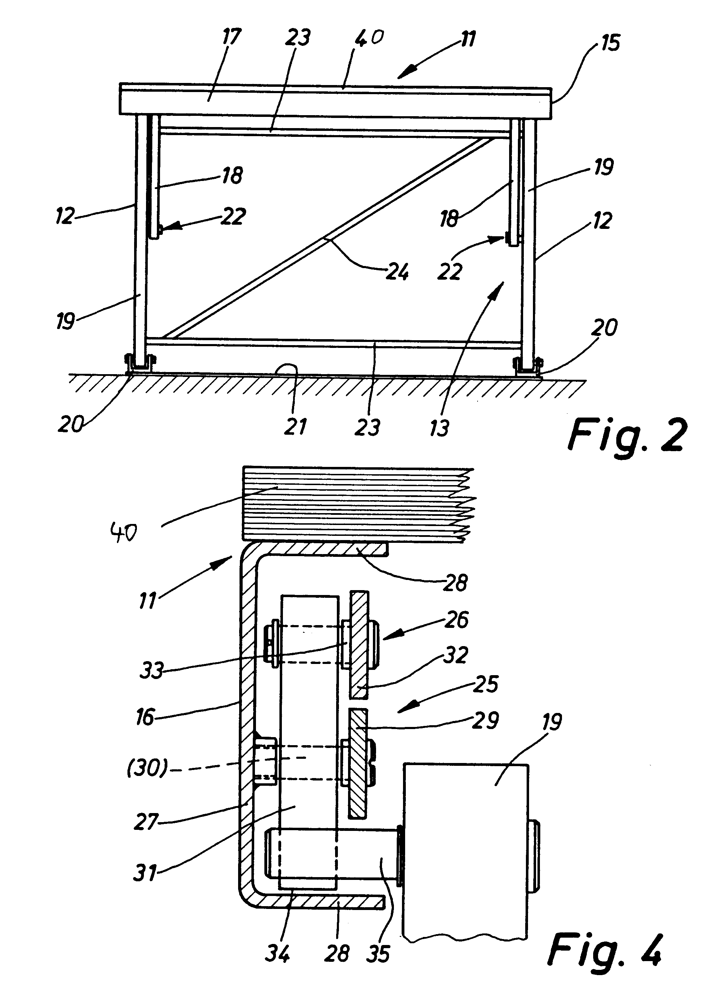

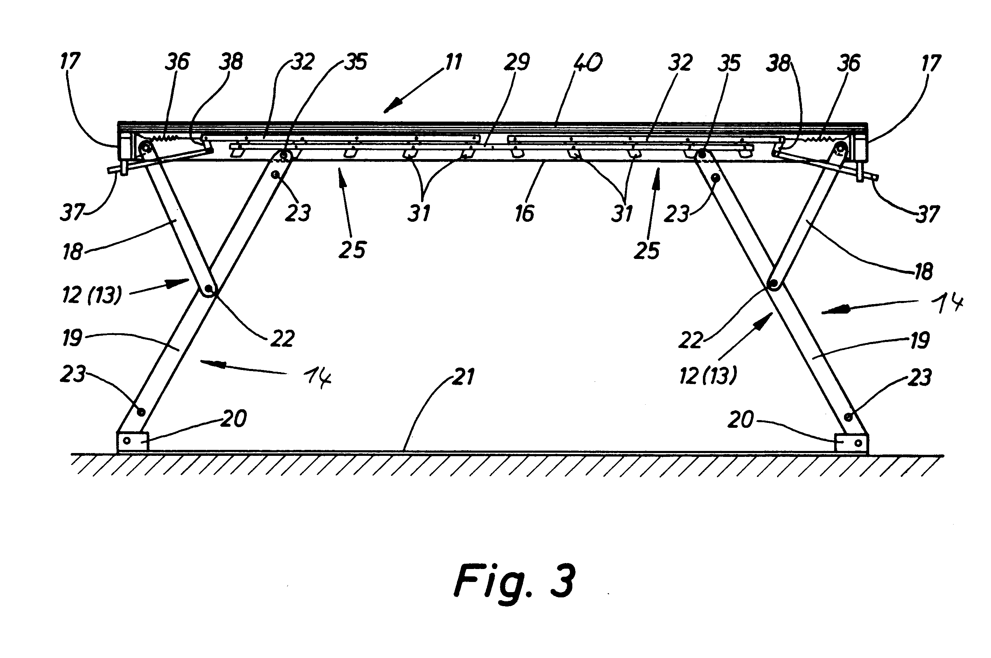

Zwei in Querrichtung des Hubpodiums 10 einander gegenüberliegende Scheren 12 bilden im vorliegenden Ausführungsbeispiel jeweils eines der beiden Scherenpaare 13. Zu diesem Zweck können die (langen) Scherenarme 19 jedes Scherenpaares 13 miteinander verbunden sein, beispielsweise durch in den Fig. 2 und 3 dargestellte Querstreben 23 und eine oder mehrere Diagonalstreben 24.

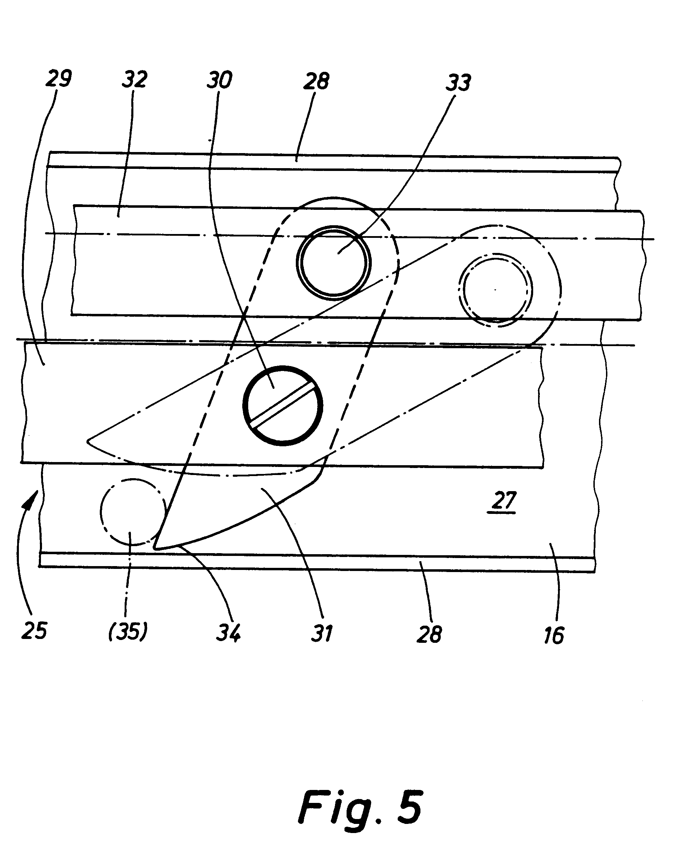

Ein erstes Ausführungsbeispiel des erfindungsgemäßen Verstellorgans für die verstellbar mit Plattform 11 des Hubpodiums 10 zu verbindenden (langen) Scherenarme 19 der Scheren 12 kann den in Fig. 3 - 5 anschaulich entnommen werden. Demnach sind erfindungsgemäß die Arretierungsorgane als Klinkenmechanismen 25 ausgebildet. Diese sind - wie die Fig. 3 und 4 besonders deutlich zeigen - in den gegenüberliegenden Längsprofilen 16 der Randeinfassung 15 angeordnet. Dazu sind die Längsprofile 16 im vorliegenden Ausführungsbeispiel C-förmig ausgebildet mit einander zugerichteten Öffnungen 26. Die so ausgebildeten Längsprofile 16 verfügen über einen (aufrechten) Verbindungssteg 27, an dessen oberen und unteren Rändern quergerichtete (horizontale) Stege 28 angeordnet sind, die gegenüber dem Verbindungssteg 27 erheblich kürzer bemessen sind. Etwa mittig in jedem Längsprofil 16 ist eine durchgehende, mit Abstand parallel zum Verbindungssteg 27 verlaufende Befestigungsschiene 29 angeordnet. Die Betätigungsschiene 29 ist durch quergerichtete Bolzen 30 mit dem Verbindungssteg 27 des Längsprofils 16 verschraubt. Auf jedem dieser Bolzen ist eine Klinke 31 des Klinkenmechanismusses 25 etwa mittig gelagert, derart, daß die Klinke 31 in einer aufrechten, parallel zum Verbindungssteg 27 verlaufenden Ebene schwenkbar ist. Die Verschwenkung der Klinken 31 erfolgt am (oberen) freien Ende derselben, und zwar durch eine parallel verlaufende oberhalb der Befestigungsschiene 29 angeordnete Betätigungsschiene 32. Letzte ist durch eine entsprechende Bolzenverbindung 33 gelenkig mit den Klinken 31 verbunden. Durch Verschiebung der Betätigungsschiene 32 in ihrer Längsrichtung erfolgt ein Verschwenken der Klinken 31 um ihre durch die Bolzen 30 gebildete Drehachse an der Befestigungsschiene 29. Hierdurch können die Klinken in eine Ent- bzw. Verriegelungsstellung verschwenkt werden.

In der Fig. 4 ist die Verriegelungsstellung einer Klinke 31 dargestellt, bei der sie sich in einer fast aufrechten Position befindet, bei der das (untere) freie Ende 34 der Klinke 31 von innen vor dem unteren Steg 28 zu liegen kommt bzw. hieran anschlägt zur Begrenzung des Schwenkwinkels der Klinke 31 in ihrer Belastungsrichtung.

Auch die Arretierung des oberen Endes des (langen) Scherenarmes 19 durch den Klinkenmechanismus 25 kann der Fig. 4 entnommen werden. Demnach verfügt das obere Ende des (langen) Scherenarmes 19 über einen quergerichteten Kragbolzen 35, der nach außen seitlich gegenüber dem (langen) Scherenarm 19 vorsteht, derart, daß er durch die Öffnung 26 des C-Profils in das Längsprofil 26 hineinragt, und zwar zwischen die Befestigungsschiene 29 und den (unteren) Steg 28 hindurch. Durch diese Ausbildung des oberen Endes des (langen) Schwenkarms 19 kann der seitlich vorstehende Bereich des Kragbolzens 35 in den Einflußbereich einer Klinke 31 des Klinkenmechanismusses 25 gelangen, indem bei Belastung des Hubpodiums 10 der (lange) Schwenkarm 19 mit seinem Kragbolzen 35 vor der jeweils nächsten Klinke 31 zur Anlage kommt und sich so hiergegen abstützt, wobei sich wiederum die Klinke 31 gegebenenfalls auf dem unteren Steg 28 abstützt, wodurch der Drehbereich derselben begrenzt und der Klinkenmechanismus 25 bzw. die Betätigungsschiene 32 desselben beim belasteten Hubpodium 10 unbelastet bleiben.

Die Verteilung der Klinken 31 auf die Längsprofile 16 geht aus der Fig. 3 hervor. Demnach ist dem freien Ende jedes (langen) Scherenarmes 19 der Scheren 12 ein Klinkenmechanismus 25 zugeordnet. Im vorliegenden Fall besteht der Klinkenmechanismus 25 für jeden (langen) Scherenarm 19 aus insgesamt fünf Klinken 31. Jeder dieser Gruppe von Klinken 31 ist eine separate Betätigungsschiene 32 zugeordnet, die gelenkig mit den oberen Enden aller fünf Klinken 31 verbunden ist. Den zu den Stirnseiten der Plattform 11 gerichteten Enden der Betätigungsschienen 32 ist jeweils eine Feder, nämlich eine Zugfeder 36 zugeordnet, die mit den Querprofilen 17 in Verbindung steht. Durch die Zugfedern 36 werden die Klinken 31 über die jeweiligen Betätigungsschienen 32 in ihre Verriegelungsstellung gebracht, das heißt, derart verschwenkt, daß diese unter der Befestifungsschiene 29 hervorragen und einen Anschlag für die Kragbolzen 35 der (langen) Scherenarme 19 bilden. Zum Entriegeln eines jeden Klinkenmechanismus 25 dient im vorliegenden Ausführungsbeispiel eine unter dem Querprofil 17 hervorragende, längsverschiebliche Betätigungsstange 37. Diese ist mit ihren dem Betätigungsende gegenüberliegenden Endbereich unten an einem mittig am Längsprofil 16 gelagerten Hebel 38 angelenkt, dessen oberes Ende mit dem zur Zugfeder 36 gerichteten Endbereich der jeweiligen Betätigungsschiene 32 verbunden ist. Durch längsgerichtetes Ziehen an der Betätigungsstange 37 wird auf diese Weise der Hebel 38 derart verschwenkt, daß entgegen der Zugwirkung der Zugfeder 36 die Betätigungsschiene 32 in Richtung auf die Mitte der Plattform 11 bewegt wird zum Verschwenken aller an der jeweiligen Betätigungsschiene 32 angelenkten Klinken 31 in eine Entriegelungsstellung. In dieser lassen sich die Kragbolzen 35 der entsprechenden (langen) Scherenarme 19 der Scheren 12 an den Klinken 31 vorbeibewegen zum Verstellen des Hubpodiums 10. Nach einem Loslassen der Betätigungsstange 37 gehen die Klinken 31 mit der Betätigungsschiene 32 dann infolge der Federkraft der Zugfeder 36 selbsttätig wieder in eine Verriegelungsstellung zurück in der die Kragbolzen 35 der (langen) Scherenarme 19 dann an den der jeweiligen Höhenbzw. Neigungsposition der Plattform 11 entsprechenden Klinken 31 anliegen.

Schließlich kann der Fig. 3 entnommen werden, daß jedem Längsprofil 16 zwei gegenüberliegende Klinkenmechanismen 25 zugeordnet sind, die eine Verschwenkung ihrer Klinken 31 in entgegengesetzten Richtungen ermöglichen. Dementsprechend sind in jedem Längsprofil 16 zwei einander gegenüberliegende Betätigungsschienen 32 angeordnet. Zur Befestigung der Klinken 31 an dem jeweiligen Längsprofil 16 ist hingegen für beide Klinkenmechanismen 25 eine einzige, durchgehende Befestigungsschiene 29 vorgesehen.

Da die Neigung der Plattform 11 nur in Längsrichtung derselben verstellbar sein soll, erfolgt die Verstellung zweier Scheren 12 eines Scherenpaares 13 jeweils gleichzeitig. Damit gleichwohl von einer Bedienungsposition sich ein Scherenpaar 13 verstellen läßt, sind nach einem weiteren wesentlichen Merkmal der Erfindung die entsprechenden Klinkenmechanismen 25 in gegenüberliegenden Längsprofilen 16 synchron in eine Ent- oder Verriegelungsstellung bringbar. Dazu sind die Verstellenden der beiden zusammenwirkenden Betätigungsschienen 32 in den gegenüberliegenden Längsprofilen 16 miteinander verbunden, beispielsweise durch eine in den Figuren nicht dargestellte, quergerichtete Stange, die die unteren Enden der in gegenüberliegenden Längsprofilen 16 angeordneten Hebel 38 verbindet. Mittig an dieser Verbindungsstange kann dann die in der Fig. 3 gezeigte Betätigungsstange 37 angeordnet sein, so daß durch Ziehen oder Schieben derselben gleichzeitig beide Klinkenmechanismen 25 in eine Ent- bzw. Verriegelungsstellung bringbar sind zum gemeinsamen Verstellen beider Scheren 12 eines Scherenpaares 13.

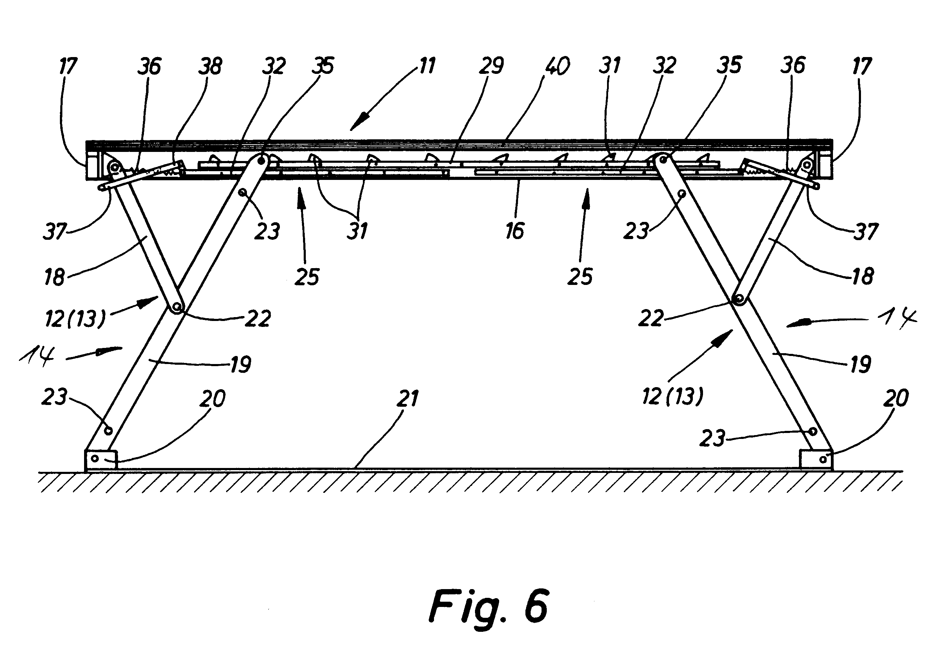

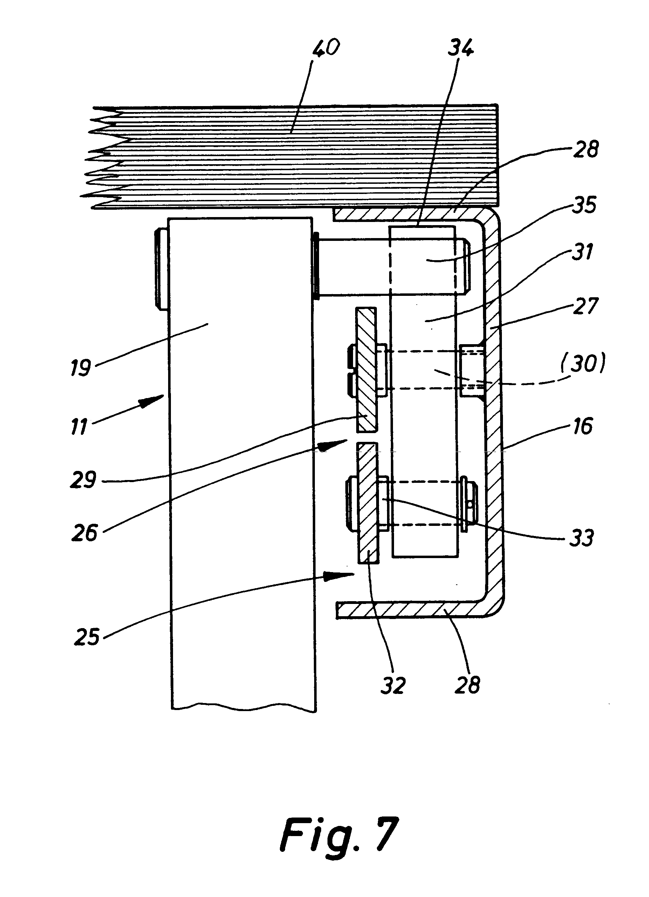

Ein zweites, besonders vorteilhaftes Ausführungsbeispiel der Erfindung ist in den Fig. 6 bis 8 dargestellt. Es unterscheidet sich vom vorstehend beschriebenen Ausführungsbeispiel in der Anordnung der Befestigungsschienen 29 und der Betätigungsschienen 32 der Klinkenmechanismen 25. In diesem Ausführungsbeispiel sind nämlich die Betätigungsschienen 32 unterhalb der Befestigungsschienen 29 angeordnet, bei ansonsten unveränderter Ausbildung des Klinkenmechanismusses 25. Die Kragbolzen 35 der (langen) Schwenkarme 19 treten dann zwischen der entsprechenden Befestigungsschiene 29 und dem obenliegenden Steg 28 des Längsprofils 16 in dasselbe ein. Durch diese Anordnung der Schienen (Befestigungsschienen 29; Betätigungsschienen 32) wird erreicht, daß das Eigengewicht der Betätigungsschienen 32 das Einschwenken der Klinken 31 in ihre Verriegelungsstellung unterstützt. Dadurch ist sichergestellt, daß für den Fall des Bruchs einer vorrangig zum Einschwenken der Klinken 31 in die Verriegelungsstellung dienenden Zugfeder 36 gleichwohl die Klinken 31 stets selbsttätig in die Verriegelungsstellung gelangen können, nämlich dann nur noch durch das Eigengewicht der entsprechenden Betätigungsschiene 32. Dadurch genügt der Verriegelungsmechanismus 25 dieses Ausführungsbeispiels den einschlägigen Sicherheits-bzw. Unfallverhütungsvorschriften, die an derartige Hubpodien 11 gestellt werden.

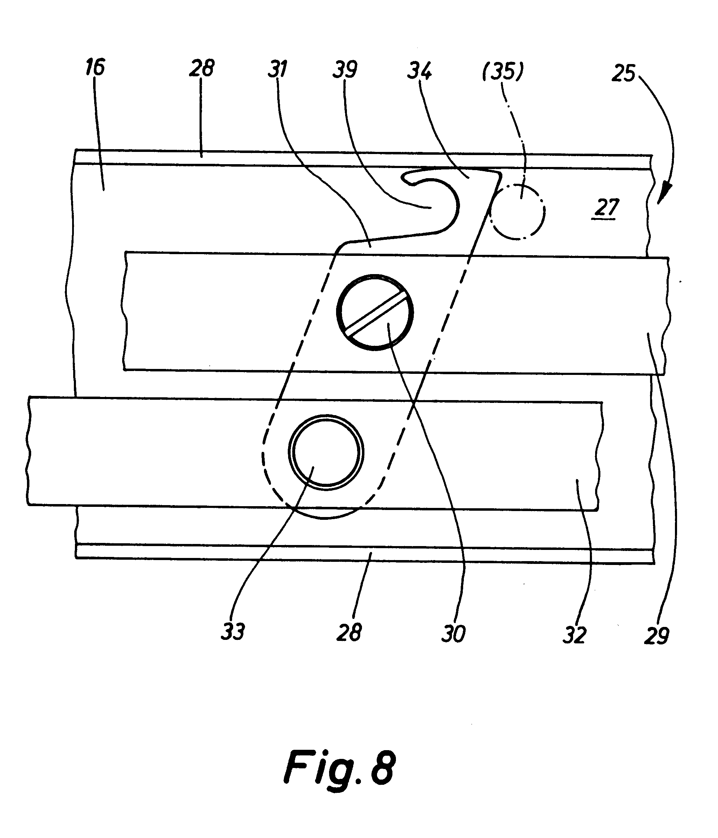

Ein weiteres, wesentliches Merkmal der Erfindung enthält die Fig. 8. Hier ist die der Anschlagseite für den Kragbolzen 33 gegenüberliegende (Rück-)Seite der Klinke 31 im Bereich des freien Endes 34 derselben mit einer maulförmigen Ausnehmung 39 versehen. Letzte verhindert ein unbeabsichtigtes Zurückschwenken der Klinke 31 durch den Kragbolzen 35 entgegen der Belastungsrichtung, wenn das Hubpodium 11 angehoben wird und dadurch die Scherenpaare 13 mit den Scherenarmen 18 und 19 durch ihre Gewichtskraft zusammenschwenken, derart, daß sich der Kragbolzen 35 am (langen) Scherenarm 19 von der Anlagefläche an der einen Klinke 31 wegbewegt zur (Rück-)Seite der benachbarten Klinke 31. In diesem Falle greift der Kragbolzen 35 in die maulförmige Ausnehmung 39 ein und klemmt dadurch die entsprechende Klinke 31 zur Verhinderung eines unkontrollierten Zurückschwenkens derselben fest, das heißt der Kragarm 35 kann beim Anheben des Hubpodiums 11 nicht ungewollt an der Klinke vorbeirutschen, in eine andere, unerwünschte Höhen- bzw. Neigungsstellung des Hubpodiums 11.

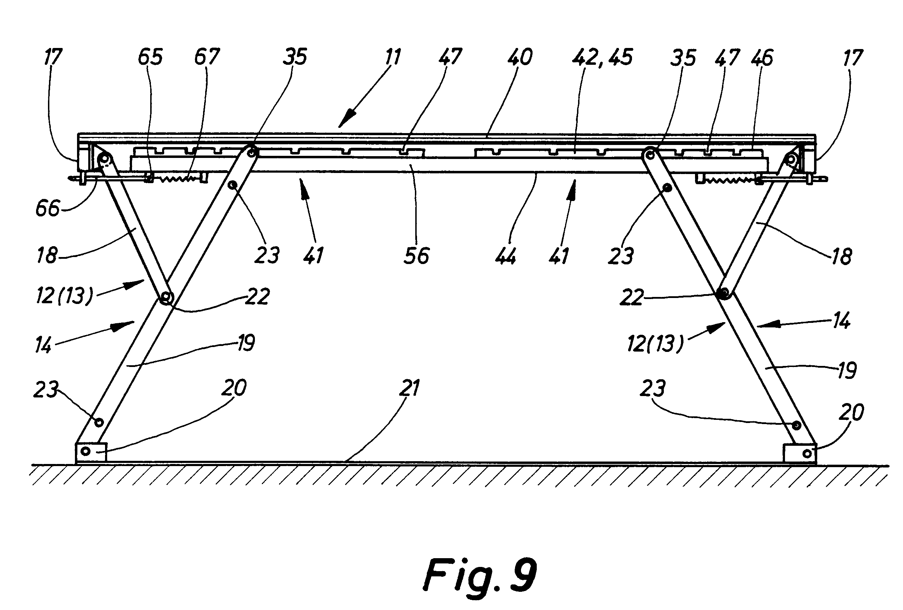

Die Fig. 9 bis 12 zeigen ein drittes wesentliches Ausführungsbeispiel des erfindungsgemäßen Hubpodiums 10. Hier ist ein Klinkenmechanismus 41 vorgesehen, der besonders einfach ausgebildet ist, nämlich jeweils nur über eine Klinke 42 für sämtliche Verstellpositionen des ihm zugeordneten Scherenpaares 17 verfügt.

Ausgebildet ist der Klinkenmechanismus 41, also auch die Klinke 42, als eine längliche Klinkenschiene 45 mit einem (flachen) rechteckförmigen Profil. Diese ist aus einer etwa aufrechten Entriegelungsstellung durch eine seitliche Kippbewegung in eine Verriegelungsstellung bringbar, indem eine von mehreren am oberen Rand 46 der Klinkenschiene 45 mit den vorgesehenenen Verriegelungsstellungen entsprechenden Abstand angeordnete Ausnehmungen 47 mit dem Kragbolzen 35 des dem Klinkenmechanismus 41 zugeordneten (langen) Scherenarms 19 des jeweiligen Scherenpaares 13 in Eingriff gelangt. Im Bereich des unteren Endes verfügt die Klinkenschiene 45 über mindestens ein quergerichtetes Betätigungsorgan, nämlich im vorliegenden Ausführungsbeispiel einen zu gegenüberliegenden Seiten der Klinkenschiene 45 vorstehenden Zylinderstift 48, der form- oder reibschlüssig mit der Klinkenschiene 45 verbunden ist. Durch diesen Zylinderstift 48 erfolgt ein Verschwenken der Klinkenschiene 45 von der annähernd aufrechten Entriegelungsstellung in die dazu geneigte Verriegelungsstellung und umgekehrt. Dazu dient eine dem Zylinderstift 48 zugeordnete Betätigungsschiene 43 mit einem im vorliegenden Falle U-förmigen Profil, die eine korrespondierend zu dem Zylinderstift 48 angeordnete und ausgebildete Betätigungskulisse 49 aufweist.

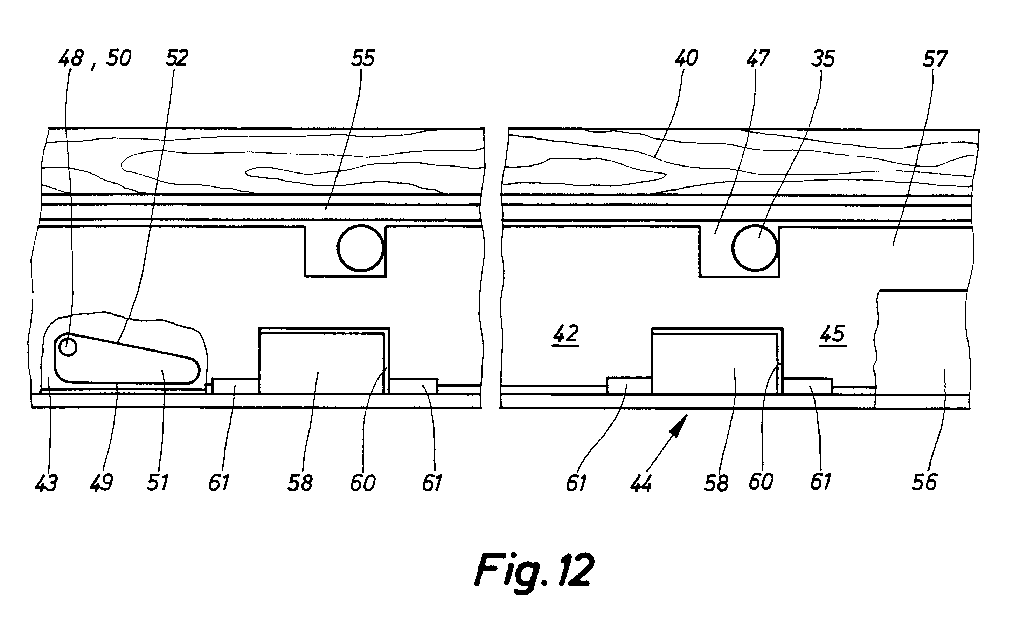

Wie die Fig. 12 besonders deutlich erkennen läßt, ist die Betätigungskulisse 49 als ein (länglicher) dreieckförmiger Durchbruch 51 in der Betätigungsschiene 43 ausgebildet, der über eine geneigt zur Längsrichtung der Betätigungsschiene 43 verlaufende Hypotenuse 52 verfügt. An dieser gleitet das Ende 50 des Zylinderstiftes 48 bei einer Verschiebung der Betätigungsschiene 43 entlang, wodurch ein Verschwenken der Klinkenschiene 45 in bzw. aus der aufrechten Stellung derselben heraus erfolgt.

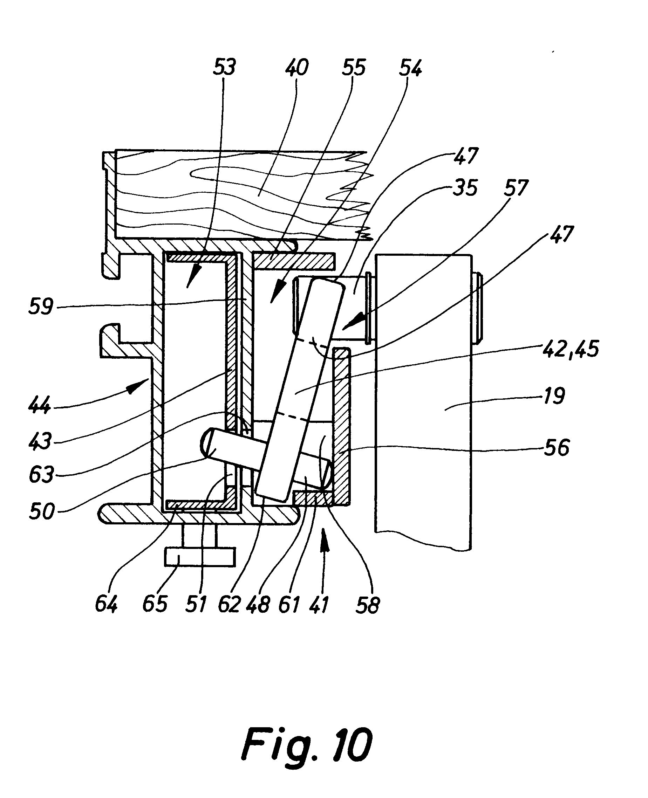

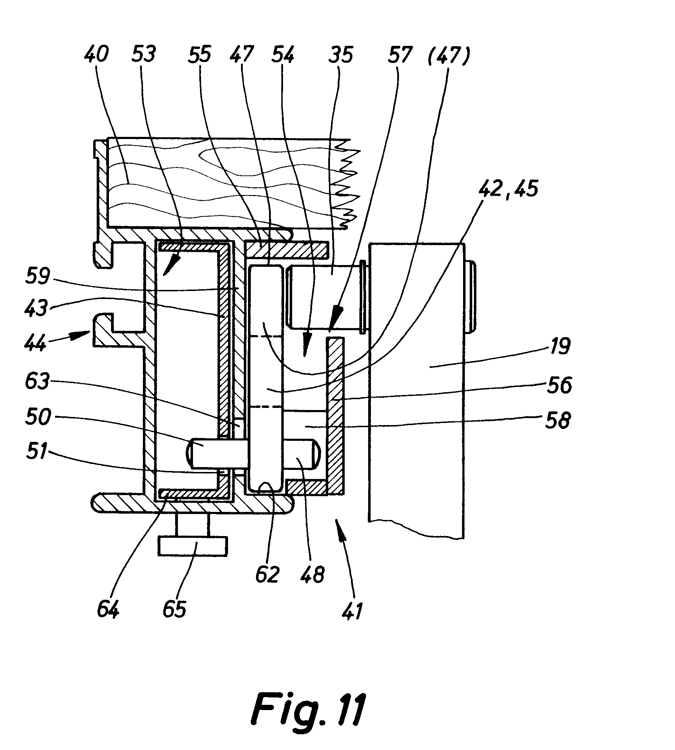

Wie die Figuren 10 und 11 besonders deutlich zeigen, ist ein Längsprofil 44 zur Unterbringung der Betätigungsschiene 43 sowie der Klinkenschiene 45 in besonderer Weise ausgebildet, nämlich mit einem (geschlossenen) Mittelteil 53 versehen, in dem die U-förmige Betätigungsschiene 43 längsverschieblich gelagert ist, und an der zu den Scherenarmen 18 bzw. 19 gerichteten Seite neben dem Mittelteil 43 mit einem teilweise offenen rahmenartigen Klinkengehäuse 54 angeordnet. Letzteres verfügt an der Oberseite über einen mit dem Längsprofil 44 verbundenen Abdeckstreifen 55 und eine aufrechte, unter den Kragbolzen 35 längs verlaufende Stirnabdeckung 56, die gleichzeitig zur Führung der Kragbolzen 35 dient. Dadurch ragt durch einen offenen Längsstreifen 57 über der Stirnabdeckung 56 der Kragbolzen 35 in das Klinkengehäuse 54 hinein, um in Verriegelungsstellung des Klinkenmechanismusses 41 in Eingriff mit der jeweiligen Ausnehmung 47 gelangen zu können. Verbunden ist die Stirnabdeckung 56 mit Abstand voneinander angeordnete, rechteckförmige Anschlagklötze 58, die wiederum mit einem zwischen dem Mittelteil 53 und dem Klinkengehäuse 54 angeordneten (aufrechten) Steg 58 des Längsprofils 44 in Verbindung stehen, vorzugsweise durch entsprechende Schrauben.

Damit dienen die Anschlagklötze 58 einerseits als Abstandshalter der Stirnabdeckung 56 zum Steg 59, während anderseits die Anschlagklötze 58 die Klinkenschiene 45 des Klinkenmechanismusses 41 längsverschieblich im Klinkengehäuse 54 halten, wozu die Klinkenschiene 45 mit entsprechenden korrespondierenden Ausnehmungen 60 für die Anschlagklötze 58 versehen ist.

Weiterhin sind - wie die Fig. 10 bis 12 besoinders deutlich zeigen - an beiden Seiten neben den Anschlagklötzen 58 Führungsstreifen 61 vorgesehen, die vorzugsweise mit der Stirnabdeckung 56 verbunden, nämlich verschraubt sind. Die Führungsstreifen 61 halten den unteren Rand 62 der Klinkenschiene 45 annähernd unverschieblich an einer bestimmten Position im Klinkengehäuse 54, nämlich neben dem Steg 59. Somit definieren die Führungsstreifen 61 einen Dreh- bzw. Schwenkpunkt der Klinkenschiene 45 im Bereich des unteren Randes 62 derselben zur Verhinderung eines seitlichen Auswanders des unteren Randes 62 der Klinkenschiene 45 bei der Betätigung des Zylinderstiftes 48 durch die Betätigungsschiene 43.

Der Fig. 10 kann noch entnommen werden, daß im Bereich des Zylinderstiftes 48 der Steg 59 zwischen dem Mittelteil 53 und dem Klinkengehäuse 54 eine korrespondierende (kreisrunde) Ausnehmung 63 aufweist zum Hindurchtritt des Endes 50 des Zylinderstiftes 48 vom Klinkengehäuse 54 in das Mittelteil 53 um dort in Eingriff mit der Betätigungskulisse 49 der Betätigungsschiene 43 gelangen zu können.

Schließlich geht aus der Fig. 10 noch hervor, daß mit dem unteren (horizontalen) Schenkel der C-förmigen Betätigungsschiene 43 ein nach unten aus dem Längsprofil 44 herausragender Betätigungsknopf verbunden ist, der mit einer sich im Bereich des jeweiligen Querprofils 17 der Randeinfassung 15 sich befindenden Betätigungsstange 66 in Verbindung steht. Durch diese sind zweckmäßigerweise die beiden gegenüberliegenden Klinkenmechanismen 41 jeder Stütze 14 gleichzeitig in die Entriegelungsstellung bringbar durch Ziehen der Betätigungsstange 66 entgegen der Kraftrichtung einer ebenfalls mit dem Betätigungsknopf 65 in Verbindung stehenden Zugfeder 67, die fest mit der Randeinfassung 15, nämlich vorzugsweise dem Längsprofil 44 verbunden ist und beim Loslassen der Betätigungsstange 66 die ihr zugeordneten Betätigungschienen 43 selbsttätig in die Verriegelungsposition bewegt, wodurch nicht gezeigte Federorgane gleichzeitig die Klinkenschienen 45 aus der (aufrechten) Entriegelungsstellung in die (geneigte) Verriegelungsstellung verschwenken.

**Patentansprüche**

1. Hubpodium bzw. -podest mit einer durch zwei einander gegenüberliegenden Stützen (14) in der Höhe und/oder Neigung verstellbaren Plattform (11), wobei jede Stütze (14) aus einem Paar nebeneinanderliegender Scheren (12) mit zwei gelenkig miteinander verbundenen Scherenarmen (18, 19) gebildet ist, und ein freies Ende eines Scherenarms (19) jeder Schere (12) in einer der einzustellenden Höhe bzw. Neigung der Plattform (11) entsprechenden Stellung durch Klinkenmechanismen (25) feststellbar ist, **dadurch gekennzeichnet,** daß jeder Klinkenmechanismus (25) etwa mittig an einer gemeinsamen Befestigungsschiene (29) verschwenkbar bzw. verdrehbar gelagerte Klinken (31) aufweist, die jeweils an einem ihrer freien Enden mit einer gemeinsamen Betätigungsschiene (32) verbunden sind.

2. Hubpodium nach Anspruch 1, dadurch gekennzeichnet, daß jedem Scherenpaar (13) ein Klinkenmechanismus (25, 41) zugeordnet ist.

3. Hubpodium nach Anspruch 1 oder 2, dadurch gekennzeichnet, daß jeder Klinkenmechanismus (25) eine der Anzahl von unterschiedlichen Stellungen beider Stützen (14) der Plattform (11) entsprechende Anzahl von Klinken (31) aufweist, wobei die Klinken (31) der einen Stütze (14) entgegengesetzt gerichtet zu den jeweiligen Klinken (31) der anderen Stütze (14) sind.

4. Hubpodium nach einem oder mehreren der Ansprüche 1 bis 3, dadurch gekennzeichnet, daß die Klinken (31) durch mindestens eine Feder (Zugfeder 36) und/oder durch ihr Eigengewicht in eine Verriegelungsstellung bringbar sind und aus derselben heraus durch eine Zugbewegung entgegen der Lastrichtung der Feder (Zugfeder 36) herausschwenkbar sind, wobei vorzugsweise alle Klinken (31) einer Stütze (14) aus mit Abstand nebeneinander liegenden Scheren (12) gemeinsam betätigbar sind.

5. Hubpodium nach Anspruch 1, sowie einem oder mehreren der weiteren Ansprüche, da-durch gekennzeichnet, daß die Befestigungs-schiene (29) und die Betätigungsschiene (32) mit Abstand übereinanderliegend in einer seitlich unter einer Platte (14) der Plattform (11) angeordneten Profilschiene (Längsprofil 16) Vorzugsweise C-förmigen Querschnitts, angeordnet sind, und zwar insbesondere derart, daß die Klinken (31) durch das Eigengewicht der ihr zugeordneten Betätigungsschienen (32) selbsttätig in die Verriegelungsstellung schwenken durch Anordnung der Betätigungsschienen (32) unter den Befestitungsschienen (29).

6. Hubpodium nach Anspruch 1 sowie einem oder mehreren der weiteren Ansprüche, dadurch gekennzeichnet, daß die freien Enden (34) der Klinken (31) in Verriegelungsstellung an einem (unteren) Steg (28) der Profilschiene (Längsprofil 16) anliegen zur Begrenzung des Schwenkwegs der Klinken (31) gegen ihre Belastungsrichtung.

7. Hubpodium nach Anspruch 1 sowie einem oder mehreren der weiteren Ansprüche, dadurch gekennzeichnet, daß die der Anschlagseite gegenüberliegende Rückseite der Klinken (31) ein Klemmorgan (maulförmige Ausneh-mung 39) zum unbeabsichtigten Zurücksch-wenken der Klinken (31) gegen ihre Belastungsrichtung aufweist.

8. Hubpodium bzw. -podest mit einer durch zwei einander gegenüberliegenden Stützen (14) in der Höhe und/oder Neigung verstellbaren Plattform (11), wobei jede Stütze (14) aus einem Paar nebeneinanderliegender Scheren (12) mit zwei gelenkig miteinander verbundenen Scherenarmen (18, 19) gebildet ist, und ein freies Ende eines Scherenarms (19) jeder Schere (12) in einer der einzustellenden Höhe bzw. Neigung der Plattform (11) entsprechenden Stellung durch Klinkenmechanismen (41) feststellbar ist, dadurch gekennzeichnet, daß jeder Klinkenmechanismus (41) über eine gemeinsame Klinke (42) für alle Stellungen der ihr zugeordneten Schere (12) verfügt, die als längliche Klinkenschiene (45) ausgebildet ist, welche mittels einer ihr zugeordneten Betätigungsschiene (43) durch seitliches Neigen aus einer aufrechten Entriegelungsposition in eine Verriegelungsposition bringbar ist.

9. Hubpodium nach Anspruch 8, dadurch gekennzeichnet, daß die zur Bildung der Klinke (42) dienende Klinkenschiene (45) selbsttätig durch ein oder mehrere Federorgane in ihre (geneigte) Verriegelungsposition bringbar und/oder arretierbar ist.

10. Hubpodium nach Anspruch 8 oder 9, dadurch gekennzeichnet, daß die Klinke (42) bzw. die zur Bildung derselben dienende Klinkenschiene (45) im unteren Bereich ein quergerichtetes Betätigungsorgan (Zylinderstift 48) aufweist, das in einen korrespondierenden, kulissenförmigen Durchbruch (51) einer (länglichen) Betä-tigungsschiene (43) hineinragt zur Verschwen-kung der Klinke (42) bzw. der Klinkenschiene (45) entgegen der Federvorspannung in die (aufrechte) Entriegelungsstellung.

11. Hubpodium nach Anspruch 8, dadurch gekennzeichnet, daß die Klinkenschiene (45) axial un-verschieblich in einer gehäuseartigen Halte-rung (Klinkengehäuse 54) am Längsprofil (44) der Randeinfassung (15) angeordnet ist.

12. Hubpodium nach einem oder mehreren der Ansprüche 8 bis 11, dadurch gekennzeichnet, daß die Klinkenschiene (45) an ihrem oberen Rand (46) mit im Abstand zueinander angeordneten Ausnehmungen (47) zum Eingriff eines Kragbolzens (35) am freien Ende des langen Scherenarmes (19) der ihr zugeordneten Schere (12) versehen ist.

**Claims**

1. Elevating podium or rostrum having a platform (11) which can be adjusted for height and/or inclination by means of two mutually opposite struts (14), each strut (14) being formed from a pair of mutually adjacent shears (12) having two shear arms (18, 19) connected by a hinge, and a free end of a shear arm (19) of each shear (12) being securable by ratchet mechanisms (25) in a position corresponding to the setting height or inclination of the platform (11), characterised in that each ratchet mechanism (25) exhibits, approximately centrally on a joint securing rail (29), swivellably or twistably mounted ratchets (31), which are in each case connected at one of their free ends to a joint actuating rail (32).

2. Elevating podium according to Claim 1, characterised in that to each pair of shears (13) there is assigned a ratchet mechanism (25, 41).

3. Elevating podium according to Claim 1 or 2, characterised in that each ratchet mechanism (25) exhibits a number of ratchets (31) corresponding to the number of different positions of the two struts (14) of the platform (11), the ratchets (31) of the one strut (14) pointing in opposite direction to the respective ratchets (31) of the other strut (14).

4. Elevating podium according to one or more of Claims 1 to 3, characterised in that the ratchets (31) can be brought into a locking position by at least one spring (tension spring 36) and/or by their intrinsic weight and can be swivelled out of the same by a pulling movement counter to the direction of load of the spring (tension spring 36), preferably all ratchets (31) of a strut (14) of shears (12) lying at a distance apart, adjacent to one another, being jointly actuable.

5. Elevating podium according to Claim 1 and one or more of the further claims, characterised in that the securing rail (29) and the actuating rail (32) are disposed at a distance apart, one above the other, in a profile rail (longitudinal profile 16), preferably of C-shaped cross-section and disposed laterally beneath a panel (14) of the platform (11), and this, in particular, in such a way that the ratchets (31), as a result of the intrinsic weight of the actuating rails (32) assigned to them, swivel automatically into the locking position as a result of the arrangement of the actuating rails (32) beneath the securing rails (29).

6. Elevating podium according to Claim 1 and one or more of the further claims, characterised in that the free ends (34) of the ratchets (31), in the locking position, lie in contact with a (bottom) cross-piece (28) of the profile rail (longitudinal profile 16), in order to limit the swivel path of the ratchets (31) towards their direction of load.

7. Elevating podium according to Claim 1 and one or more of the further claims, characterised in that the back of the ratchets (31), facing the stop side, exhibits a clamping mechanism (jaw-shaped recess 39) for the unintended swivelling back of the ratchets (31) towards their direction of load.

8. Elevating podium or rostrum having a platform (11) which can be adjusted for height and/or inclination by means of two mutually opposite struts (14), each strut (14) being formed from a pair of mutually adjacent shears (12) having two shear arms (18, 19) connected by a hinge, and a free end of a shear arm (19) of each shear (12) being securable by ratchet mechanisms (41) in a position corresponding to the setting height or inclination of the platform (11), characterised in that each ratchet mechanism (41) has a joint ratchet (42) for all positions of the shear (12) assigned to it, which ratchet is configured as a longitudinal ratchet rail (45), which, by means of an actuating rail (43) assigned to it, can be brought from an upright release position into a locking position by lateral inclination.

9. Elevating podium according to Claim 8, characterised in that the ratchet rail (45) serving to form the ratchet (42) can be automatically brought into its (inclined) locking position and/or held fast there by one or more spring members.

10. Elevating podium according to Claim 8 or 9, characterised in that the ratchet (42), or the ratchet rail (45) serving to form the same, exhibits in its bottom area a transversely directed actuating member (cylindrical pin 48), which projects into a corresponding, corridor-shaped hole (51) in an (oblong) actuating rail (43), in order to swivel the ratchet (42) or the ratchet rail (45), counter to the spring pretension, into the (upright) release position.

11. Elevating podium according to Claim 8, characterised in that the ratchet rail (45) is disposed in axially displaceable arrangement in a casing-style mounting (ratchet casing 54) on the longitudinal profile (44) of the edge surround (15).

12. Elevating podium according to one or more of Claims 8 to 11, characterised in that the ratch-

et rail (45) is provided, at its top edge (46), with interval-spaced recesses (47) for the engagement of a collar bolt (35) at the free end of the long shear arm (19) of the shear (12) assigned to the ratchet rail.

## Revendications

1. Podium ou plate-forme élévateur comportant une plate-forme (11) réglable en hauteur et/ou inclinaison par l'intermédiaire de deux supports (14) situés à l'oppose l'un de l'autre, dans lequel chaque support (14) est formé par une paire de ciseaux (12), disposés l'un à côté de l'autre et comprenant deux bras de ciseaux (18, 19) reliés l'un à l'autre de façon articulée, et dans lequel une extrémité libre d'un bras de ciseaux (19) de chacun des ciseaux (12) peut être fixé par un des mécanismes à cliquets (25) dans une position correspondant à la hauteur ou inclinaison à régler de la plate-forme (11), caractérisé en ce que chaque mécanisme à cliquets (25) présente, approximativement au milieu sur une barre de fixation commune (29), des cliquets (31) qui sont montés de façon à pouvoir être basculés ou pivotés et qui sont reliés chaque fois par une de leurs extrémités libres à une barre d'actionnement (32) commune.

2. Podium élévateur suivant la revendication 1, caractérisé en ce qu'à chacune des paires de ciseaux (13) est adjoint un mécanisme à cliquets (25, 41).

3. Podium élévateur suivant l'une ou l'autre des revendications 1 et 2, caractérisé en ce que chaque mécanisme à cliquets (25) présente un nombre de cliquets (31) correspondant au nombre de positions différentes des deux supports (14) de la plateforme (11), les cliquets (31) d'un des supports (14) étant dirigés en sens contraire à celui des cliquets respectifs (31) de l'autre support (14).

4. Podium élévateur suivant une ou plusieurs des revendications 1 à 3, caractérisé en ce que les cliquets (31) peuvent être mis dans une position de blocage par au moins un ressort (ressort de traction 36) et/ou par leur poids propre et en ce qu'ils peuvent être pivotés hors de cette position par un mouvement de traction opposé au sens de sollicitation du ressort (ressort de traction 36), de préférence tous les cliquets (31) d'un support (14) pouvant être actionnés en commun à partir de ciseaux (12) situés à distance les uns à côté des autres.

5. Podium élévateur suivant la revendication 1 ainsi que suivant l'une ou plusieurs des autres revendications, caractérisé en ce que la barre de fixation (29) et la barre d'actionnement (32) sont agencées à distance de façon superposée dans un profilé (profilé longitudinal 16), de préférence à section transversale en forme de C, agencé latéralement en dessous d'une plaque (40) de la plateforme (11) et à vrai dire en particulier de façon que les cliquets (31) basculent automatiquement dans la position de blocage, par le poids propre des barres d'actionnement (32) qui leur sont adjointes, par un agencement des barres d'actionnement (32) sous les barres de fixation (29).

6. Podium élévateur suivant la revendication 1 ainsi que suivant l'une ou plusieurs des autres revendications, caractérisé en ce que les extrémités libres (34) des cliquets (31) sont appuyés en position de blocage sur une aile (inférieure) (28) du profilé (profilé longitudinal 16), pour la délimitation du trajet de basculement des cliquets (31), à l'encontre de leur sens de charge.

7. Podium élévateur suivant la revendication 1 ainsi que suivant l'une ou plusieurs des autres revendications, caractérisé en ce que le côté arrière des cliquets (31), situé à l'opposé du côté de butée, présente un organe de serrage (évidement 39 en forme de gueule) pour le basculement en retour non intentionnel des cliquets (31), en sens opposé à leur sens de charge.

8. Podium ou plate-forme élévateur comportant une plate-forme (11) réglable en hauteur et/ou inclinaison par l'intermédiaire de deux supports (14) situés à l'opposé l'un de l'autre, dans lequel chaque support (14) est formé par une paire de ciseaux (12), disposés l'un à côté de l'autre et comprenant deux bras de ciseaux (18, 19) reliés l'un à l'autre de façon articulée, et dans lequel une extrémité libre d'un bras de ciseaux (19) de chacun des ciseaux (12) peut être fixé par des mécanismes à cliquets (41) dans une position correspondant à la hauteur ou inclinaison à régler de la plate-forme (11), caractérisé en ce que chaque mécanisme à cliquets (41) dispose d'un cliquet commun (42), pour toutes les positions des ciseaux (12) qui lui sont adjoints, réalisé sous la forme d'une barre à cliquets (45) allongée qui peut être mise dans une position de blocage, au moyen d'une barre d'actionnement (43) qui lui est adjointe, par une inclinaison latérale en dehors d'une position de déblocage droite.

9. Podium élévateur suivant la revendication 8, caractérisé en ce que la barre à cliquets (45) servant à la formation du cliquet (42) peut être automatiquement mise dans sa position de blocage (inclinée), ou peut être arrêtée, par l'intermédiaire d'un ou de plusieurs organes à ressort.

10. Podium élévateur suivant l'une ou l'autre des revendications 8 et 9, caractérisé en ce que le cliquet (42) ou la barre à cliquets (45) servant à la formation de ce dernier présente dans la zone inférieure un organe d'actionnement, dirigé transversalement (broche cylindrique 48), qui pénètre dans un perçage (51) correspondant, en forme de coulisse, d'une barre d'actionnement (allongée) (43) pour le basculement du cliquet (42) ou de la barre à cliquets (45), à l'encontre de la précontrainte du ressort, dans la position de déblocage (droite).

11. Podium élévateur suivant la revendication 8, caractérisé en ce que la barre à cliquets (45) est axialement agencée de façon non coulissante dans un support en genre de boîtier (boîtier à cliquets 54), sur le profilé longitudinal (44) du cadre de bordure (15).

12. Podium élévateur suivant l'une ou plusieurs des revendications 8 à 11, caractérisé en ce que la barre à cliquets (45) est pourvue sur son bord supérieur (46) d'évidements (47), agencés à distance l'un de l'autre, pour entrer en prise avec une cheville en porte-à-faux (35) à l'extrémité libre du long bras de ciseaux (19) des ciseaux (12) qui lui sont adjoints.

Fig. 1

Fig. 2

Fig. 4

**Fig. 3**

EP 0 255 055 B1

**Fig. 5**

Fig. 6

**Fig. 7**

**Fig. 8**

*Fig. 9*

EP 0 255 055 B1

**Fig. 10**

**Fig. 11**

Fig.12